# FASCICULE DE BREVET EUROPEEN

(11) **EP 1 317 687 B1**
(45) Date de publication et mention de la délivrance du brevet: **09.04.2008**
(21) Numéro de dépôt: 01972153.9
(22) Date de dépôt: 13.09.2001
(51) Int. Cl.: G03B 15/00

(54) **SYSTEME DE PRISE DE VUE DESTINE A LA REALISATION DE MONTAGES DE REALITE VIRTUELLE**
BILDAUFNAHMESYSTEM ZUR REALISIERUNG VON VIRTUAL-REALITY-MONTAGEN
PHOTOGRAPHING SYSTEM FOR PRODUCING ViRTUAL REALITY EDITING

(30) Priorité: 13.09.2000 FR 0011669
(43) Date de publication de la demande: 11.06.2003
(73) Titulaire: Dbjay, Jean-Michel, 82000 Montauban (FR)
(72) Inventeur: Dbjay, Jean-Michel, 82000 Montauban (FR)
(74) Mandataire: Santarelli
(86) Numéro de dépôt international: PCT/FR2001/002839
(87) Numéro de publication internationale: WO 2002/023265

(56) Documents cités:
- US-A- 3 688 676
- US-A- 5 282 029
- US-A- 5 857 119

## Description

La présente invention concerne un dispositif pour réaliser des prises de vue en trois dimensions, pouvant être destinées tout particulièrement à la réalisation de montages VR (pour Virtual Reality). Le montage VR est un procédé informatique selon lequel des clichés subissent un traitement numérique en vue d'être visualisés sur ordinateur à l'aide d'un logiciel de visualisation dit « viewer » qui donne l'illusion d'une représentation en trois dimensions de la réalité photographiée. Ces montages en trois dimensions sont donc construits à partir d'images photographiques réelles, ce qui les distingue des images numériques 3D dites-images de synthèse. C'est une discipline récente, les premières présentations VR datant du milieu de la décennie 1990-2000.

Actuellement, on recense deux types de montage VR : le panorama et l'objet.

Le panorama VR est une représentation numérique en trois dimensions d'un espace que l'on visualise sur écran d'ordinateur et avec laquelle on interagit à l'aide d'un logiciel de visualisation dit « viewer » qui simule une immersion et une évolution dans cet espace. Le panorama VR est construit sur la base d'une image panoramique fixe de l'espace représenté. Cette image panoramique peut couvrir jusqu'à 360° par 360° pour une visualisation sphérique de l'espace. Laquelle image panoramique, subit un traitement numérique afin d'être visualisée en trois dimensions à l'aide du logiciel de visualisation.

L'outil mécanique de prise de vue utilisé pour réaliser un panorama est une tête panoramique. Cette tête panoramique est un support d'appareil de prise de vue rotatif, permettant de faire pivoter l'appareil sur un axe passant par le point nodal de l'objectif. En général, la tête panoramique est graduée ou à crans de telle sorte que l'on puisse mettre en position l'appareil avec suffisamment de précision pour chaque cliché.

L'objet VR est une représentation numérique en trois dimensions d'un objet que l'on visualise sur un ordinateur et avec lequel on interagit pour le manipuler à l'aide d'un logiciel de visualisation dit « viewer ». L'objet VR est construit à partir d'une séquence de prises de vue sphérique d'un objet, soit une série de clichés pris sous de multiples angles de vue de l'objet. Ces clichés sont traités numériquement et compilés en un seul fichier. L'utilisateur peut manipuler et voir l'objet jusqu'à 360° par 360°.

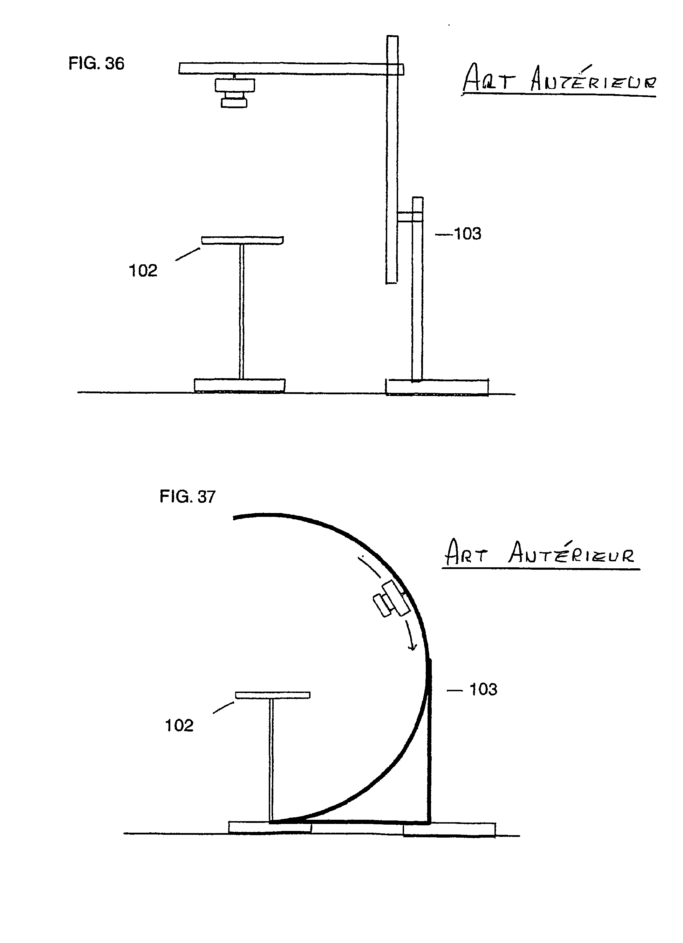

Actuellement, l'outil mécanique, communément utilisé pour les prises de vues en trois dimensions nécessaires à la réalisation d'un objet VR, est un « équipement objet » (object rig). Les figures 36 et 37 présentent deux exemples d'équipements-objets. Cet équipement est composé de deux éléments :
- un support tournant 102 sur lequel repose l'objet, combiné avec,
- un support d'appareil de prise de vue 103. Ce support d'appareil de prise de vue permet de placer l'appareil de prise de vue à plusieurs endroits sur une courbe régulière proche d'un arc de cercle (ou d'un arc d'ellipse) et l'objectif de l'appareil est orienté quelle que soit sa position sur la courbe vers un point de focalisation situé sur l'axe de rotation de l'objet photographié.

Ce support d'appareil est en général réalisé à l'aide d'un bras oscillant verticalement 103, fixé à un pied posé fixement sur le sol ; lequel bras oscillant porte et entraîne l'appareil de prise de vue sur une tige en déport de telle sorte que son objectif soit toujours orienté vers un point de focalisation situé sur l'axe virtuel de rotation de l'objet. La combinaison du mouvement rotatif horizontal de l'objet sur son plateau tournant et du mouvement rotatif vertical de l'appareil de prise de vue sur le bras oscillant permet une prise de vue sur tous les angles d'assiette et d'inclinaison définis pour le montage et la compilation du fichier VR. On trouve aussi de tels supports sous la forme d'un bras cintré posé fixement sur le sol, lequel bras est équipé d'un système de fixation mobile d'appareil photo qui permet, en le déplaçant le long du bras cintré, de donner le mouvement vertical de rotation et d'inclinaison à l'appareil. Autres exemples de supports d'appareils sont divulgués dans US-A-5 282 029 et US-A-3 688 676.

On voit que la construction d'un objet VR photographié à l'aide d'un de ces équipements présente de nombreuses limites :
- l'objet doit être présenté de telle sorte qu'il puisse tourner sur lui-même, il est donc forcément dissocié de son environnement.
- en conséquence de quoi, pour avoir une représentation correcte de l'objet VR, on est obligé de détourer l'objet sur l'ensemble des clichés originaux avant compilation afin d'éviter de montrer le support tournant et l'environnement immobile de l'objet. Cette manipulation est laborieuse.

Le dispositif selon l'invention a pour but de remédier à ces inconvénients et de proposer un système pour réaliser un troisième type d'images VR sur la base de montages numériques dits objets VR.

À cet effet, le dispositif selon l'invention propose de combiner les effets de la prise de vue panoramique VR aux effets de la prise de vue objet VR, et, en outre, il est prévu pour permettre d'utiliser événtuellement simultanément plusieurs appareils de prise de vue.

L'invention propose alors un dispositif pour la réalisation de prises de vue sphériques selon la rev. 1.

Elle propose également un dispositif pour la réalisation de prises de vue sphériques d'une scène, caractérisé en ce qu'il comporte un support muni de moyens de fixation pour plusieurs appareils de prise de vue, les appareils étant destinés à être tous orientés vers un point de la scène à photographier et le support pouvant être en mouvement de rotation relatif autour d'un axe sensiblement vertical par rapport à la scène photographiée, et en ce qu'il est équipé de moyens permettant de le suspendre au-dessus de la scène à photographier.

Ainsi la présente invention propose un support d'appareil d'équipement-objet suspendu en au moins un point au-dessus de la scène à photographier et qui ne repose pas fixement sur le sol. En studio par exemple, l'objet est placé dans son décor sur un plateau tournant, isolé du reste du studio par les cloisons naturelles de son décor. Le système de prise de vue est immergé dans l'ensemble du décor sans entraver le mouvement de rotation du plateau ni être affecté par ce mouvement de rotation.

Dans une forme de réalisation de l'invention, le dispositif est monté pivotant autour d'un axe vertical, la scène à photographier restant fixe. L'ensemble du système de prise de vue tourne alors autour de l'objet au moyen d'un système de rotation. Ainsi, le support d'appareil d'équipement-objet est fixé à un point de rotation qui est placé au-dessus de l'objet ou de la scène à photographier. Ce système peut être réalisé à l'aide d'au moins un bras porteur équipé d'un système de fixation des appareils de prise de vue de telle sorte que la forme du bras combiné avec la forme des composants du système de fixation permettent de placer le ou les appareils utilisés de façon adéquate à la prise de vue d'objet VR.

L'avantage du point de rotation placé au-dessus de l'objet est que le dispositif selon l'invention permet de faire des prises de vues de l'objet en faisant tourner l'ensemble du système de prise de vue autour de l'objet sans qu'aucune structure du système n'apparaisse dans le champ photographique. Ceci ne serait pas possible avec une rotation guidée au sol.

Le support présente par exemple un bras porteur cintré en forme sensiblement d'arc de cercle ou d'arc d'ellipse disposé dans un plan vertical. Dans ce cas, le support présente éventuellement un contrepoids équilibrant le bras porteur par rapport aux moyens de suspension.

Dans une forme de réalisation, on peut prévoir que les moyens de fixation sont mobiles le long d'un rail de guidage en forme d'arc de cercle disposé dans un plan vertical. Dans une autre forme de réalisation, les moyens de fixation sont montés-par exemple sur un bras oscillant autour d'un axe sensiblement horizontal, ce bras étant monté sur le support.

Avantageusement, les moyens de suspension sont munis également de moyens permettant de faire varier la hauteur et/ou l'inclinaison du dispositif.

L'ensemble du dispositif selon l'invention pouvant être d'un poids relativement important, on peut prévoir que le support présente des moyens d'appui au sol.

Un dispositif selon l'invention permet d'avoir une représentation de l'objet et de l'espace dans lequel il se trouve. En cela on a une combinaison des effets d'objet VR et des effets de panorama VR. Le logiciel de visualisation permettra alors d'évoluer autour de l'objet tout en voyant défiler le panorama de l'espace qui l'entoure.

Au-delà de ce gain substantiel au niveau de la représentation, le système selon l'invention permet des gains de productivité en évitant le long travail de détourage de l'objet photographié.

Par ailleurs, le dispositif selon l'invention permet d'utiliser éventuellement simultanément plusieurs appareils de prise de vue : on gagnera ainsi en temps de prise de vue, ce qui permet la photographie sphérique de modèles vivants ainsi que des gains de productivité.

Il convient de signaler que l'on trouve déjà des montages d'objet VR présentés dans un environnement. Mais ces montages n'apparaissent que sur une seule assiette et les environnements sont rajoutés à l'aide d'outils informatiques et sont réalisés à l'aide d'images de synthèse.

Selon des modes particuliers de réalisation et des développements additionnels de l'invention :

Dans un développement additionnel de l'invention, le ou les bras sont ancrés à un support équipé d'un système de rotation permettant de faire tourner le système sur un axe virtuel passant par le point de focalisation de la prise de vue objet VR. Ainsi c'est l'ensemble du système de prise de vue qui tourne autour de l'objet.

Dans le cas d'un mouvement en rotation des moyens de fixation d'un appareil de prise de vue par rapport à un axe sensiblement horizontal, cet axe horizontal coupe l'axe vertical de rotation du dispositif par rapport à la scène à photographier au point de focalisation de la prise de vue.

Le support peut être rigide, souple ou articulé. II peut être réglable en hauteur afin de pouvoir librement régler la position et la hauteur du système de prise de vue. Sans exclure d'autres solutions techniques, il peut s'agir simplement d'un axe porteur assurant à la fois le rôle de support et le rôle d'élément du système de rotation, mais il peut s'agir aussi par exemple d'une simple plaque ou d'un bras articulé et/ou télescopique.

Le système de rotation peut être assuré indifféremment et sans restriction par un axe, un pivot, une rotule ou un guide circulaire tel qu'un disque ou un rail...( liste non exhaustive et non exclusive). Dans le cas d'un axe, il sera de préférence creux pour laisser passer tous les éventuels fils d'alimentation ou de connexion nécessaires.

Le système de rotation du bras peut être équipé d'un système permettant de donner un mouvement autre que circulaire au bras. Par exemple un arbre équipé d'une came.

Le système d'ancrage du bras peut être fixé en au moins un point du bras ou être mobile le long du bras. Sans exclure d'autres solutions techniques, il peut s'agir d'un ou de plusieurs trous le long du bras dans lesquels vient s'enficher un axe ; il peut s'agir aussi d'un système de guidage permettant de faire coulisser le bras sur le point d'ancrage du support.

Un système de repérage de quelconque nature permettant de placer le bras avec suffisamment de précision (selon les nécessités de la discipline de prise de vue VR) dans son mouvement de rotation peut compléter le système. Il peut s'agir indifféremment et sans restriction d'un système de repérage visuel (secteur angulaire gradué...), mécanique (à crans, disque à détente...), électrique, électronique...etc...

La forme du ou des bras est indifférente au regard de l'invention. Seule la forme de l'ensemble bras et système de fixation du ou des appareils est à prendre en compte. L'ensemble doit être dessiné de telle sorte que l'on puisse faire passer avec suffisamment de précision (selon les nécessités de la discipline de prise de vue objet VR), en vue de profil, une courbe régulière proche d'un arc de cercle ou d'un arc d'ellipse entre chaque point correspondant au point nodal de l'objectif ou des objectifs du ou des appareils aux différents endroits où le ou les appareils sont placés au cours de la séquence de prise de vue objet. En conséquence le bras peut aussi bien naturellement former un arc de cercle, un arc d'ellipse, ou encore être de forme polygonale ou rectiligne (liste non exhaustive et sans restriction).

L'étendue du secteur couvert par le bras et son système de fixation est libre. On peut choisir de prolonger le bras de chaque côté de son point d'ancrage pour réduire de moitié la durée de la prise de vue. On aura alors éventuellement recours à une étape de retouche d'image pour faire disparaître les éléments du système se trouvant dans le champ, s'ils ne sont pas masqués par l'objet photographié.

Le plus immédiatement évident est un bras couvrant un secteur de 90° mais il peut aller jusqu'à 180°, par exemple demi-cercle vertical, ou demi-cercle horizontal, et au-delà jusqu'à se refermer sur lui-même.

Selon la même logique de réduction de la durée de la prise de vue, par exemple pour le cas de sujets photographiés incapables de tenir la pose (animaux) on pourra multiplier le nombre de bras.

Dans sa configuration la plus commune, lorsque le bras ne couvre pas plus d'un secteur d'un demi-cercle vertical on peut le prolonger horizontalement de l'autre coté de son point d'ancrage sur le système de rotation. Cette prolongation sert alors à poser d'éventuels contrepoids pour assurer l'équilibre du système et à fixer directement ou par l'intermédiaire de bras d'extension des outils en usage dans l'art de la prise de vue, par exemple éclairage, réflecteurs, fonds écrans... ceci sans restriction.

Bien entendu selon des modes particuliers de réalisation et notamment en fonction de sa taille et de sa forme, le bras pourra être d'un seul tenant ou encore composés de plusieurs éléments, éventuellement utilisables séparément, et de forme modulable. Par exemple, cas d'un bras couvrant un secteur d'un demi-cercle pouvant être séparé en deux et dont on n'utilisera qu'une partie pour ne plus couvrir qu'un secteur d'un quart de cercle.

On peut proposer un jeu complet de bras de tailles et/ou de formes différentes à utiliser selon les objets à photographier, selon le nombre d'appareils de prise de vue que l'on veut utiliser, selon le rayon de la rotation, selon le secteur angulaire que l'on veut couvrir ou les mouvements recherchés et/ou encore selon d'autres considérations et ce sans restriction.

L'ensemble bras et système de fixation des appareils peut être équipé d'un système de repérage de quelconque nature (visuel, mécanique, à crans, électrique, électronique... ceci sans restriction) destiné à faciliter la mise en place ou le déplacement du ou des éléments du système de fixation des appareils de prise de vue le long du bras. Le système de repérage le plus évident étant une graduation le long du bras.

Le système de fixation du ou des appareils peut être composé d'un ou plusieurs éléments mobiles le long du bras ou de plusieurs éléments fixes sur le bras ou encore d'une combinaison des deux.

Le déplacement de l'élément mobile le long du bras peut être assurée sans restriction par tous les moyens techniques connus en la matière (élément coulissant, chariot... ou simplement élément amovible pouvant être fixé en plusieurs points du bras).

Les éléments composant le système de fixation peuvent être souples ou articulés pour éventuellement ajuster l'inclinaison des appareils de prise de vue. Ils peuvent être de différentes forme et longueur corrélativement à la forme du bras. Ils peuvent être notamment de longueur ajustable pour permettre de régler la distance des appareils à l'objet sans zoom optique.

Le système de fixation peut aussi être composé d'au moins un bras oscillant tel qu'on le trouve en usage sur les équipements de prise de vue objet (object rig) traditionnels. Même si sa présentation fait l'objet d'un développement spécifique, on considère qu'un tel bras oscillant est une simple variante du système de fixation du ou des appareils. La jonction entre le bras oscillant et le bras se fait en au moins un point dudit bras par au moins un système permettant la rotation du bras oscillant sur un axe passant par un point déterminé se trouvant sur l'axe virtuel de rotation du système. Ceci, de sorte que la combinaison de la rotation du bras et de celle du bras oscillant permette de couvrir l'ensemble des angles d'assiette et d'inclinaison définis pour une séquence de prise de vue sphérique (objet VR).

Le système bras-bras oscillant peut être équipé d'un système de repérage de l'angle d'inclinaison du bras oscillant.

Le nombre d'éléments de fixation utilisés dans le système de fixation n'est pas limité, il dépend du nombre d'appareils de prise de vue que l'on veut utiliser simultanément et/ou du nombre d'angles d'inclinaison que l'on veut couvrir lors de la prise de vue VR.

Les éléments constitutifs du système de fixation peuvent être conçus de telle sorte qu'ils puissent s'adapter d'une part à la disposition de l'appareil (paysage ou portrait) et d'autre part à la très grande variété des appareils de prise de vue existants en permettant d'ajuster leur position. À cet effet on aura recours à une quelconque des solutions techniques de réglage en usage en la matière. Par exemple et sans restriction, système réglable sur un ou deux plans, rotules, articulations, jeu d'adaptateurs... etc...

Dans un développement additionnel de l'invention le ou les éléments qui composent le système de fixation peuvent fixer deux appareils de prise de vue pour obtenir certains effets de photographie comme la photo en relief. Les repères de position des appareils sont alors : l'axe de symétrie des deux objectifs et le centre du segment formé par les points nodaux des objectifs.

Dans un développement additionnel de l'invention, au moins un appui destiné à faire reposer le bras sur le sol pour contribuer à sa stabilité peut être adapté. En fonction de la forme du bras, l'appui au sol se fera soit à l'aide d'un élément destiné à accompagner le mouvement du bras sur le sol (par exemple une roulette), soit à l'aide d'un pivot. Le pivot est prévu pour le cas d'un bras couvrant au moins un secteur demi circulaire vertical. Un tel support pourra, sans exclure d'autres solutions techniques, se présenter sous la forme d'une tige fixée au bras et dont l'extrémité inférieure est équipée d'une roulette ou d'un pivot reposant sur le sol.

Dans un développement additionnel de l'invention, dans le cas de l'utilisation d'un bras couvrant au moins un secteur demi circulaire vertical, un pivot servant d'appui au sol, prolongé par un axe traversant le bras à sa base à son intersection avec l'axe virtuel de rotation du système, s'érige verticalement selon cet axe pour servir de support à l'objet photographié.

Dans un développement additionnel de l'invention, dans le cas de l'utilisation d'un bras couvrant au moins un secteur demi circulaire vertical, pouvant aller jusqu'au cercle, on pourra adjoindre un support d'objet fixé ou reposant en déport par rapport à l'axe virtuel de rotation du bras de telle sorte qu'il puisse maintenir l'objet photographié sur l'axe virtuel de rotation du système. Cette solution permet, par exemple, avec un peu de retouche photo, de présenter des objets en suspension dans leur environnement.

Dans un développement additionnel de l'invention, le système de prise de vue peut être équipé au niveau de son support d'un collecteur ou contact électrique tournant. Ce collecteur est destiné à alimenter ou à commander les appareils de prise de vue et les autres outils utilisés par le photographe, tels que les outils d'éclairage fixés sur le bras, ainsi qu'à connecter d'éventuels mécanismes de pilotage automatique. Ce collecteur peut être équipé d'autant de pistes que nécessaires.

Dans un développement additionnel de l'invention, le système peut être équipé d'un ou plusieurs bras d'extension rigide, articulé ou souple et destiné à venir se fixer sur le bras pour tenir les outils en usage en prise de vue (outils d'éclairage, panneaux réflecteurs, miroirs, etc...).

Dans un développement additionnel de l'invention un système de pilotage éventuellement automatisé est prévu pour entraîner le système de rotation du bras.

Dans un développement additionnel de l'invention un système de pilotage éventuellement automatisé est prévu pour entraîner les mouvements d'au moins un élément mobile du système de fixation.

Dans le cas d'un système équipé d'un bras oscillant, un système de pilotage éventuellement automatisé est prévu pour entraîner le bras oscillant.

Dans un développement additionnel de l'invention, un portique, une potence, ou un pont roulant, éventuellement réglable en hauteur, peut venir supporter l'ensemble du système. Ceci est particulièrement valable pour un usage en extérieur. On pourra alors facilement retoucher les clichés à l'aide d'un logiciel graphique pour faire disparaître le ou les piliers du support.

Dans un développement additionnel de l'invention, le système peut être maintenu par tout dispositif d'attache mobile (par exemple : ventouses, griffes de fixation).

Dans un développement additionnel de l'invention, on peut prévoir un espace cloisonné autour du cercle tracé par le mouvement de rotation du bras de sorte que l'on puisse isoler l'objet photographié et son décor. Ce cloisonnement peut servir lui-même d'élément de décor ou de support aux éléments de décor.

Les détails et avantages de la présente invention ressortiront mieux de la description qui suit, faite en référence au dessin schématique annexé, sur lequel :
Figure 1 représente une première forme de réalisation d'un système de prise de vue sphérique (vue en coupe),
Figure 2a représente une variante de réalisation du système de prise de vue
Figure 2b représente une autre variante du système de prise de vue,
Figure 3 représente une troisième variante du système de prise de vue ,
Figure 4 représente une quatrième variante du système de prise de vue ,
Figure 5 représente une cinquième variante du système où le bras est de forme elliptique,
Figure 6a représente une sixième variante du système où le bras est de forme polygonale,
Figure 6b représente une septième variante du système,
Figure 7 montre une vue d'ensemble du système selon l'invention dans son mode préféré de réalisation,
Figure 8 montre une vue détaillée du support avec un aperçu du bras et d'un élément du système de fixation de la figure 7,
Figure 9 montre une vue détaillée du support de la figure 7,
Figure 10a montre en gros plan la tête rotative à crans ou à disque à détente du support de la figure 7,
Figure 10b montre une vue en coupe de la tête rotative,
Figure 10c montre schématiquement un disque à détente,
Figure 11 montre un collecteur ou contact électrique tournant,
Figure 12 montre une vue en coupe du bras de la figure 7,
Figure 13 montre une vue du système d'ancrage du bras à la base du support,
Figure 14 montre une vue du bras équipé d'un système de fixation mobile,
Figure 15 montre une vue du bras équipée d'un système de fixation composé de plusieurs éléments,
Figure 16 montre en coupe le système de jonction des tronçons du bras,
Figure 17a montre en coupe un bras composé de trois tronçons,
Figure 17b montre une modulation possible de la forme du bras à l'aide des tronçons,
Figure 17c montre une autre modulation possible de la forme du bras à l'aide des tronçons,
Figure 17d montre une autre modulation possible de la forme du bras à l'aide des tronçons,
Figure 17e montre une autre modulation possible de la forme du bras à l'aide des tronçons,
Figure 18 montre une vue de dessus de la jonction en étoile permettant d'ancrer plusieurs bras (ici quatre) au support,
Figure 19 montre une vue en coupe la jonction en étoile permettant d'ancrer plusieurs bras (ici quatre) au support,
Figure 20 montre une vue de la prolongation horizontale du bras au-delà de son point d'ancrage au support,
Figure 21 montre la graduation le long du bras et un chariot mobile avec un repère,
Figure 22 montre un bras équipé d'un système de fixation destiné à utiliser plusieurs appareils de prise de vue,
Figure 23 montre une vue d'un segment du bras avec un chariot sur son rail équipé d'un système de frein du chariot,
Figure 24 montre une vue détaillée d'un élément du système de fixation des appareils de prise de vue,
Figure 25 montre un exemple d'un support réglable d'appareil de prise de vue,
Figure 26a montre un appareil de prise de vue sur son support en position paysage,
Figure 26b montre un appareil de prise de vue sur son support en position portrait,
Figure 27 montre un chariot sur son rail,
Figure 28 montre un appui au sol fixé sur le bras par l'intermédiaire d'un chariot,
Figure 29 montre une configuration où le bras couvre au moins un secteur d'un demi-cercle vertical,
Figure 30 montre une autre configuration du bras,
Figure 31 montre un système équipé de bras d'extension articulés,
Figure 32 montre un système d'entraînement automatique du bras,
Figure 33 montre un système d'entraînement automatique d'un chariot sur son rail,
Figure 34 montre un système de prise de vue monté sur un portique mobile et réglable en hauteur,
Figure 35 montre le système de prise de vue monté sur un portique et isolé du reste du studio par quatre cloisons,
Figure 36 présente un exemple d'équipement objet de l'art antérieur, et
Figure 37 présente un autre exemple d'équipement objet de l'art antérieur.

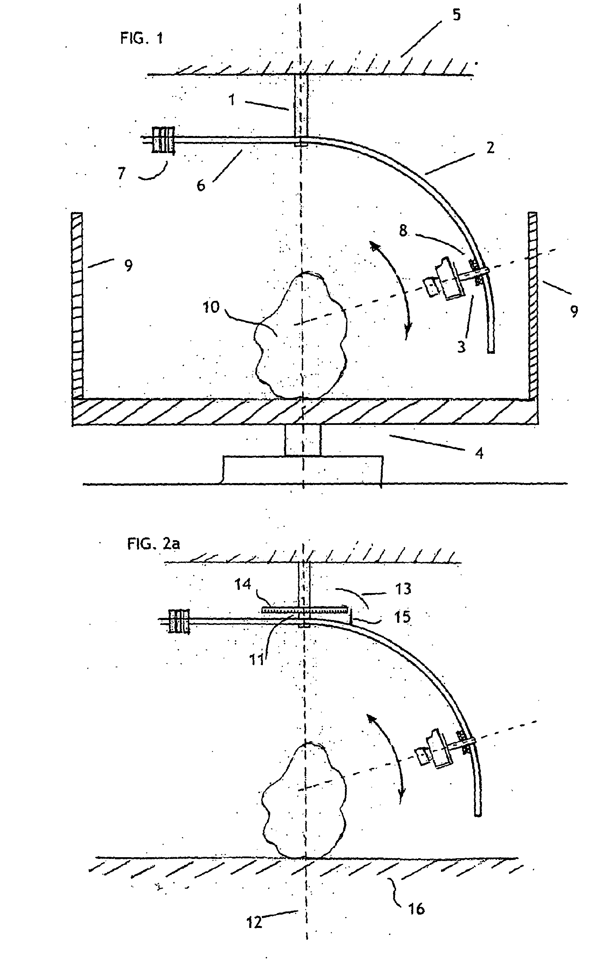

Selon un premier mode de réalisation présenté figure 1, une fixation ou un support 1 est fixé à un plafond ou une poutre 5. Ici, le support n'est pas équipé d'un sytème de rotation. Sur ce support est ancré un bras 2 formant pour une part un quart de cercle et se prolongeant pour une autre part horizontalement de l'autre côté du support. Sur cette prolongation 6 apparaissent des contrepoids 7 assurant l'équilibre du système. Sur ce bras se trouve un système de fixation 3 d'un appareil de prise de vue. Ce système de fixation est constitué d'un élément mobile 8 le long du bras. Dans cette configuration de base, la rotation du bras n'étant pas assurée, l'objet à photographier et son environnement ou décor sont posés sur un plateau tournant 4. L'ensemble objet 10 et décor est isolé du reste du studio par les cloisons 9 apparaissant en coupe. Ces cloisons peuvent servir de support au décor ou être partie intégrante du décor.

Selon le mode de réalisation illustré figure 2a, on trouve la même configuration que celle présentée figure 1, mais ici le support est équipé en plus d'un système de rotation 11 permettant la rotation du bras autour d'un axe virtuel 12. Ce système de rotation est complété par un appareillage de repérage de la rotation 13. Ce mécanisme de repérage est composé d'un disque gradué 14 fixe sur le support et d'un repère sous la forme d'une flèche 15 fixée au bras tournant. Le système peut donc tourner autour de l'objet photographié 10 qui est posé sur le sol 16.

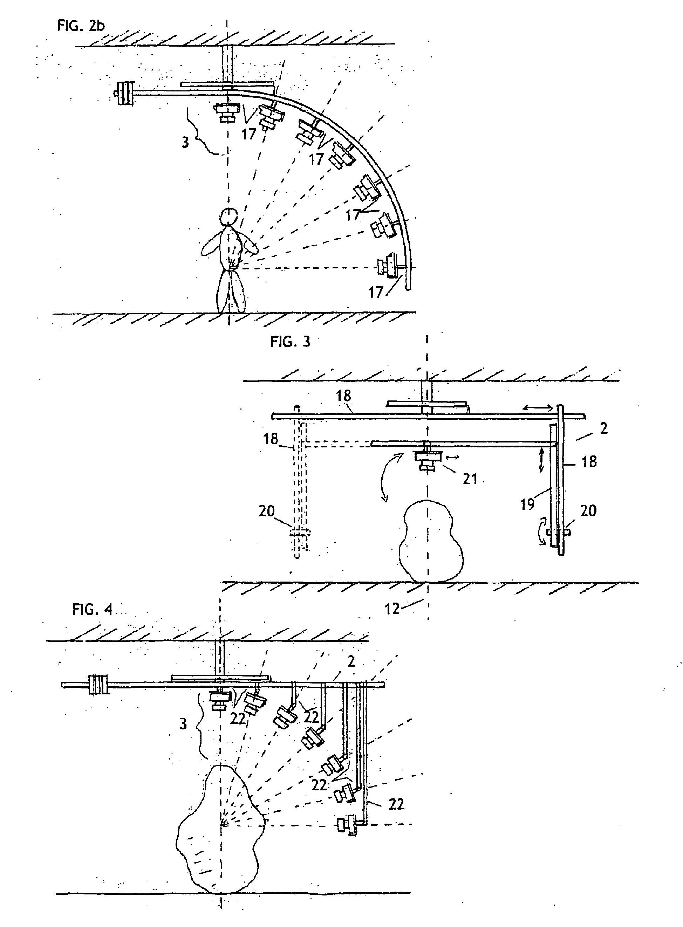

Selon le mode de réalisation apparaissant figure 2b, on retrouve la même configuration que celle présentée figure 2a mais ici, le système de fixation 3 n'est plus un élément mobile le long du bras mais est composé de plusieurs éléments fixes 17 disposés le long du bras. Ici il y a sept éléments fixes représentés. De même que sur la figure 2a, le bras présente une forme d'arc de cercle couvrant un secteur angulaire de 90°.

Selon le mode de réalisation représenté figure 3, le bras 2 est composé de deux ou trois sections 18 et est équipé d'un système de fixation des appareils de prise de vue composé d'un bras oscillant 19, tel qu'on le trouve sur les équipements-objets traditionnels. Ce bras oscillant pivote sur un ou deux axes 20 horizontaux de telle sorte qu'il puisse donner un mouvement de rotation vertical à l'appareil de prise de vue 21 et le placer successivement à tous les angles d'inclinaison définis pour une séquence de prise de vue VR. Ici, le bras oscillant est composé d'au moins deux segments perpendiculaires de sorte que l'appareil soit posé en déport pour que son objectif soit orienté vers l'axe virtuel de rotation 12 du bras. Ainsi qu'on le trouve sur les équipements-objet traditionnels, le rayon de la rotation de l'appareil de prise de vue peut être réglé en faisant coulisser les sections composant le bras oscillant les unes par rapport aux autres.

La figure 4 montre un mode possible de réalisation avec un bras rectiligne 2. On voit que le système de fixation des appareils 3 est assuré par des pattes de fixation 22 adaptées à la forme du bras pour pouvoir dessiner un arc de cercle entre les points nodaux des objectifs des appareils. Ici, les pattes sont articulées afin de pouvoir orienter l'objectif des appareils selon les nécessités de la discipline de prise de vue VR.

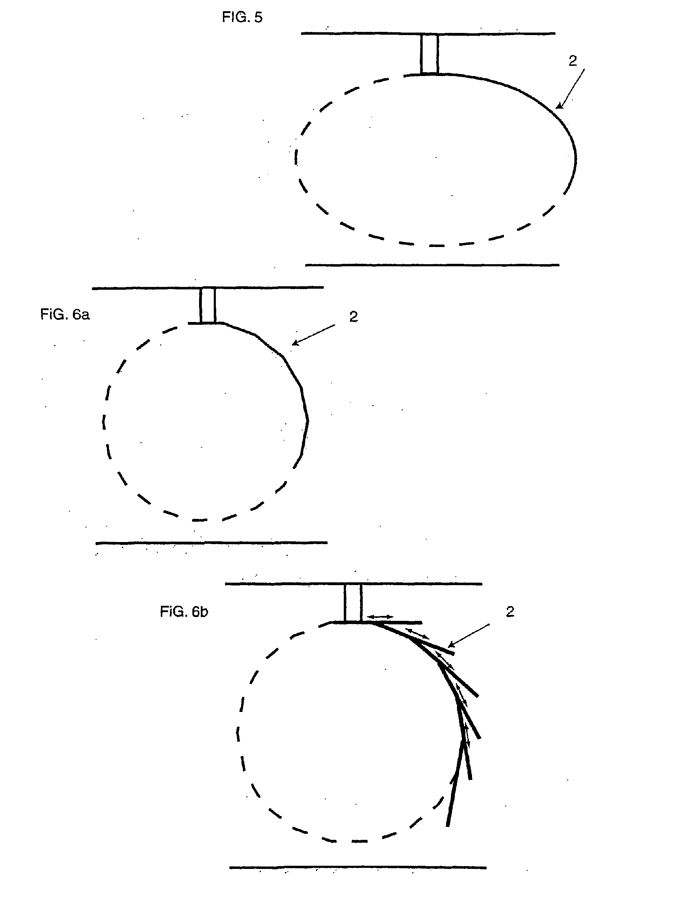

La figure 5 présente de façon très schématique un système de prise de vue selon l'invention équipé d'un bras 2 de forme elliptique. De la même façon que sur le modèle équipé d'un bras rectiligne présenté figure 4, le système de fixation pourra être composé de pattes articulées permettant d'orienter convenablement les appareils.

La figure 6a présente de façon très schématique un système de prise de vue selon l'invention équipé d'un bras 2 de forme polygonale. Ici les éléments du système de fixation seront posés au centre des segments.

La figure 6b présente un système de prise de vue selon l'invention équipé d'un bras 2 de forme polygonale modulable. Ce bras est composé de plusieurs segments fixé les uns aux autres et coulissant les uns sur les autres. Ainsi en les faisant coulisser, on peut modifier le rayon du cercle virtuel couvert par le bras.

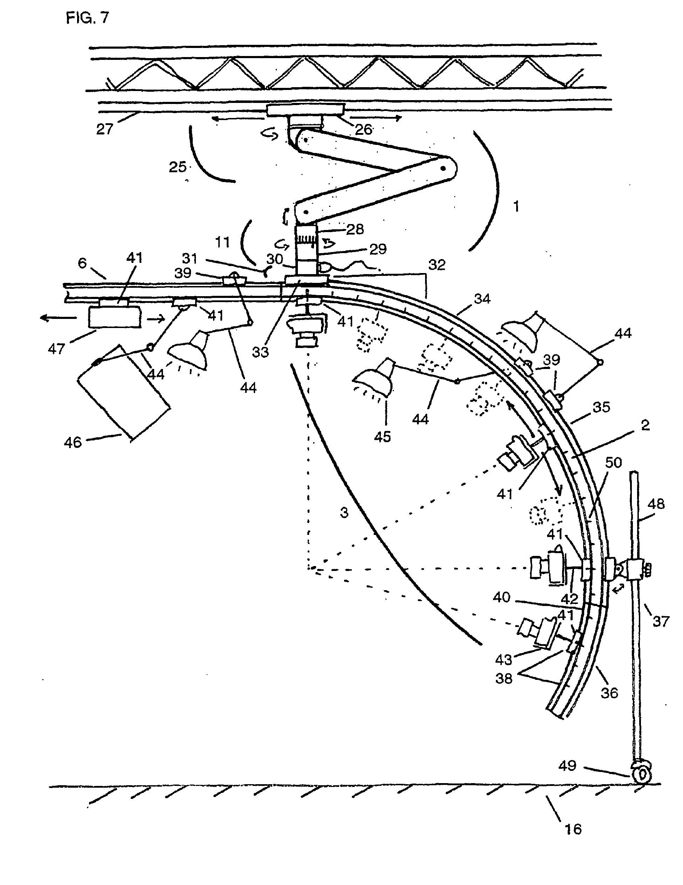

Le mode préféré de réalisation du système selon l'invention est présenté en une vue d'ensemble figure 7 et est exposé en détail dans les figures suivantes

Le support 1 est articulé et est fixé à un système de guidage 25. Le système de guidage est composé d'un chariot 26 mobile sur un rail 27. Le rail est fixé à une poutre. Ici la poutre est une poutre tubulaire en treillis dite échelle de scène.

À l'extrémité inférieure du support se trouve un système de rotation 11. Ce système de rotation est réalisé à l'aide d'une tête rotative à crans équipée de disques à détente, telle qu'on peut en trouver sur les têtes panoramiques utilisées en photographie. Cette tête rotative est composée d'un élément fixe 28 gradué en degrés et d'un élément mobile 29 équipé d'un repère.

Sous la tête rotative, fixé à la partie mobile, se trouve un contacteur électrique tournant 30 (ou collecteur) permettant d'alimenter et de connecter les appareillages fixés sur le bras.

À la base du support se trouve un système d'ancrage du bras 31. Ce système d'ancrage du bras est réalisé à l'aide d'un système de guidage 32. Ce système de guidage est composé d'un chariot d'ancrage 33 fixé à la base du support et d'un rail 34 courant sur la partie supérieure du bras.

Sur le support vient s'ancrer un bras 2. Ici le bras est cintré de forme circulaire. Il est démontable et modulable. Ici apparaissent trois tronçons. Un premier tronçon 35 couvre un secteur d'un peu plus d'un quart de cercle. Un second tronçon 36 prolonge cette partie circulaire vers le bas. Un troisième tronçon prolonge le bras horizontalement de l'autre côté de son point d'ancrage sur le support pour former la prolongation 6.

On a un système de guidage 32 sur la partie supérieure du bras et un système de guidage 38 sur la partie inférieure du bras. Le système de guidage 32 sur la partie supérieure est celui qui contribue aussi au système d'ancrage du bras. Il est composé d'un rail 34 et en plus du chariot d'ancrage, d'un ou plusieurs chariots de fixation supérieurs 39.

Le système de guidage 38 sur la partie inférieure du bras est composé d'un rail 40 et d'un ou plusieurs chariots de fixation inférieurs 41. Il est à noter que ces deux systèmes de guidage peuvent être indifféremment placés sur les côtés du bras (en fonction de l'orientation du cintrage des rails).

Le système de guidage inférieur sert de système de fixation 3 des appareils de prise de vue. Chaque élément du système de fixation est composé par un chariot inférieur 41 mobile le long du bras qui est équipé d'une patte 42 et d'un support 43 pour les appareils de prise de vue.

Le long du bras, on trouve une graduation en degrés 50 de telle sorte que l'on puisse placer avec suffisamment de précision les chariots et par conséquent les appareils sur le bras. Les chariots portent un repère permettant d'ajuster leur position par rapport à la graduation.

Dans la configuration telle qu'elle apparaît sur la figure 7, quatre chariots servent à fixer des bras d'extension 44. Ces bras d'extension sont destinés à porter les outils en usage en photographie. Par exemple un éclairage 45 et un réflecteur 46.

Sur la prolongation horizontale du bras 6 se trouve un chariot inférieur équipé d'un contrepoids 47 destiné à assurer l'équilibre du système. Au point d'intersection entre le bras et sa tangente verticale se trouve un chariot sur lequel est fixé un appui au sol 37 servant lui aussi à contribuer à la stabilité et l'équilibre du système. Cet appui au sol est constitué d'une tige réglable en hauteur 48 et à l'extrémité basse de laquelle se trouve une roulette 49 en contact avec le sol 16.

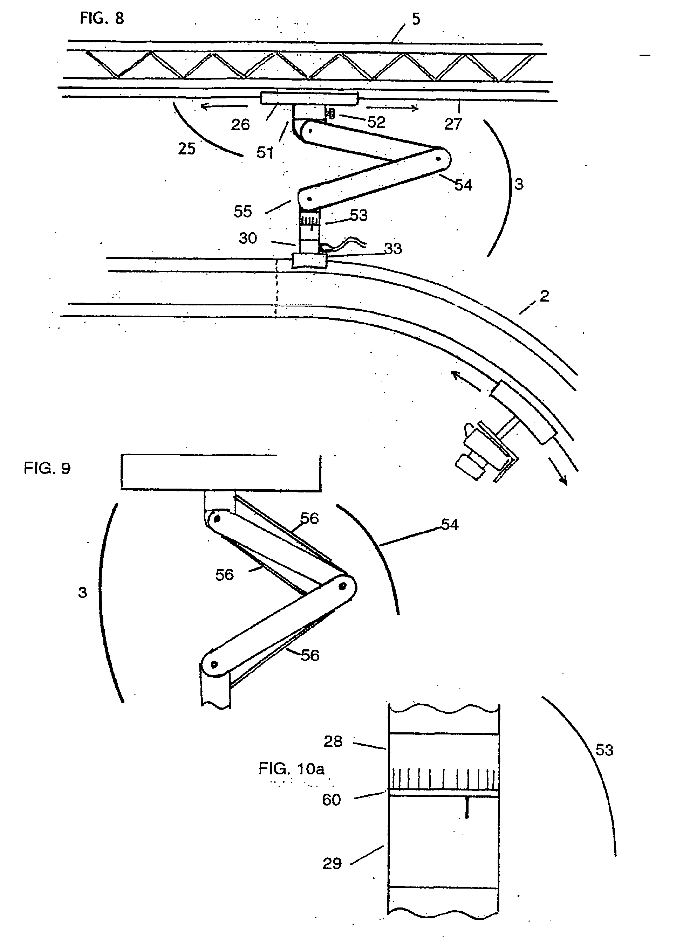

La figure 8 montre une vue détaillée du support 3. Celui-ci est fixé à un système de guidage 25 posé le long d'une poutre tubulaire en treillis 5. Ce système de guidage est composé d'un chariot 26 mobile le long d'un rail 27. Ici le support est un bras articulé 54 hydraulique qui permet de régler la position du système à distance. À la jonction du bras articulé avec le chariot de fixation sur la poutre 26 se trouve un système de rotation 51 que l'on peut bloquer à l'aide d'une molette de serrage 52. De même à l'extrémité basse du bras articulé se trouve une articulation 55 permettant de donner une inclinaison au bras. Le but de ce montage sur chariot avec système de rotation et articulation est d'obtenir le maximum de souplesse dans le positionnement et l'utilisation du système.

On retrouve la tête rotative 53, le contact tournant 30 et le chariot d'ancrage du bras 33.

La figure 9 présente le bras articulé 54 qui constitue le support animé par des vérins 56.

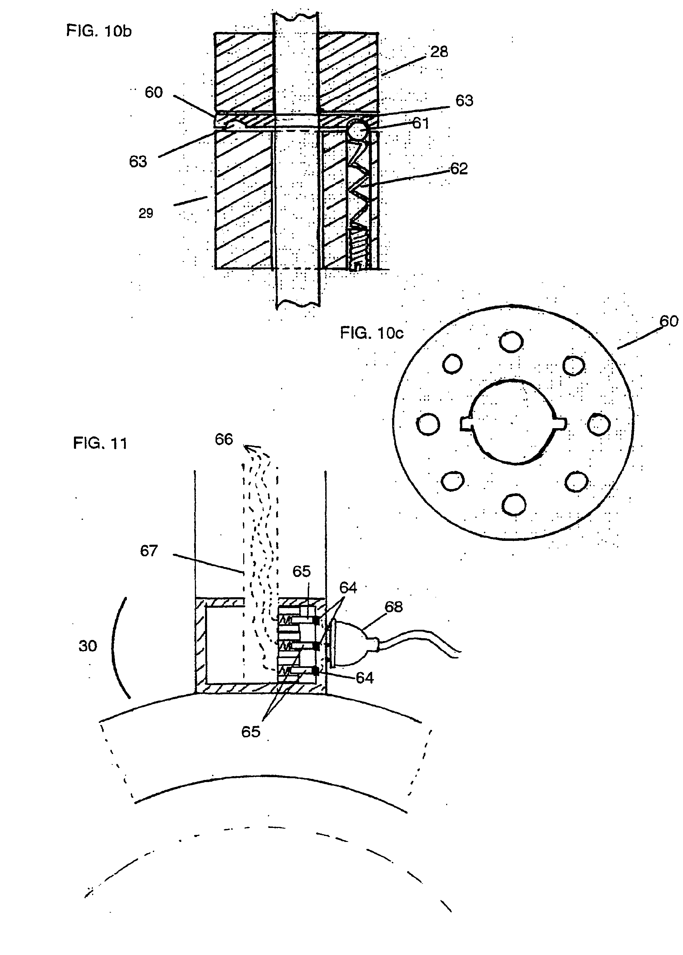

La figure 10a présente la tête rotative 53 à cran. Celle-ci est composée d'un élément supérieur fixe sur le support 28 et d'un élément mobile tournant 29. Le disque à détente 60 sépare les deux éléments. La figure 10b montre à titre d'exemple une vue en coupe de la tête rotative. Sur la partie supérieure, on voit l'élément fixe 28 uni à l'axe et sur la partie inférieure l'élément tournant 29. Une bille 61 qui subit la pression verticale d'un ressort 62 vient se loger dans des encoches 63 aménagées sur le disque à détente 60. La tête rotative offre ainsi une résistance à chaque fois que l'élément tournant a effectué une rotation déterminée par la distance entre les encoches sur le disque à détente tel qu'il apparaît schématiquement sur la figure 10c. Bien entendu, on prévoira un jeu de disques compatibles pour pouvoir choisir l'angle de rotation successif.

La figure 11 présente un système possible de contact tournant 30. Ici il s'agit d'un contact tournant à trois pistes 64. Trois balais 65 sont posés sur l'axe de rotation 67 du système. L'axe de rotation est creux de sorte que trois fils d'alimentation 66 puissent alimenter les balais par l'intérieur de l'axe. Sur le contact tournant s'enfiche une prise 68 destinée à alimenter les équipements électriques sur l'axe. Ce contact tournant est un contact à trois pistes, mais on peut imaginer des contacts tournant avec autant de pistes que nécessaire tant pour l'alimentation électrique des équipements que pour le transfert d'information informatique par exemples.

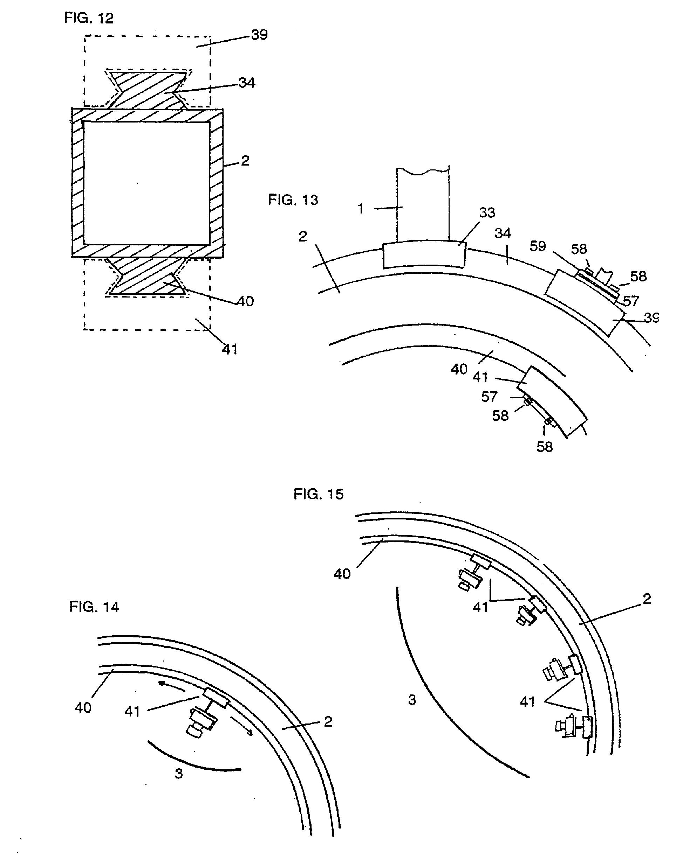

La figure 12 montre une vue en coupe du bras 2. Ici le bras est un bras tubulaire de section carrée pour des raisons de commodité de représentation. Mais la section peut être de toute autre nature, les bras de section circulaire sont plus faciles à cintrer. Sur les parties inférieures et supérieures du bras apparaissent en coupe les systèmes de guidage. Ces systèmes de guidages sont composés par les rails 34 et 40 sur lesquels viennent coulisser les chariots (en pointillés) 39 et 41. Ainsi que nous le signalions, les systèmes de guidage pourraient tout aussi bien être fixés sur les côtés du bras, ce en fonction de la forme du cintrage des rails. (C'est une solution que l'on pourra préférer car en plaçant les systèmes de guidage sur les côtés du bras, on pourra utiliser deux systèmes de guidage identiques avec des chariots interchangeables). Ici les chariots sont présentés comme de simples éléments coulissants, mais en fonction de la finition du système de guidage utilisé, on pourra avoir des chariots montés sur billes, galets ou aiguilles....

La figure 13 montre l'ancrage du bras 2 sur le support 1 par l'intermédiaire d'un chariot d'ancrage 33 fixé au support. On voit aussi un chariot de fixation 39 posé sur le rail supérieur 34 et un chariot de fixation 41 posé sur le rail inférieur 40. Au-delà des appareils de prise de vue, on pourra fixer sur ce chariot de fixation toutes sortes d'appareillages utiles en photographie ainsi que des bras d'extension. Les deux sont équipés d'un système standard de fixation, ici une zone plane 57 pouvant recevoir des vis 58. On peut aussi imaginer un système de clips. Toutes les extensions du système destinées à venir se fixer au chariot sont équipées d'une fixation standard correspondante 59.

La figure 14 montre un bras 2 équipé d'un système de fixation 3 composé d'un seul chariot 41 mobile sur le rail inférieur 40. Ce type de configuration est destiné à des prises de vue avec un seul appareil. Le chariot est déplacé le long du bras pour chaque angle d'inclinaison durant la séquence de prise de vue.

La figure 15 montre un bras 2 équipé d'un système de fixation 3 composé de plusieurs chariots 41 sur le rail inférieur 40. Cette configuration s'applique à une séquence de prise de vue avec plusieurs appareils. Ici les chariots ont été mis en position sur le rail et ne sont pas destinés à être déplacés pendant la séquence de prise de vue (sauf pour la recherche d'effets particuliers).

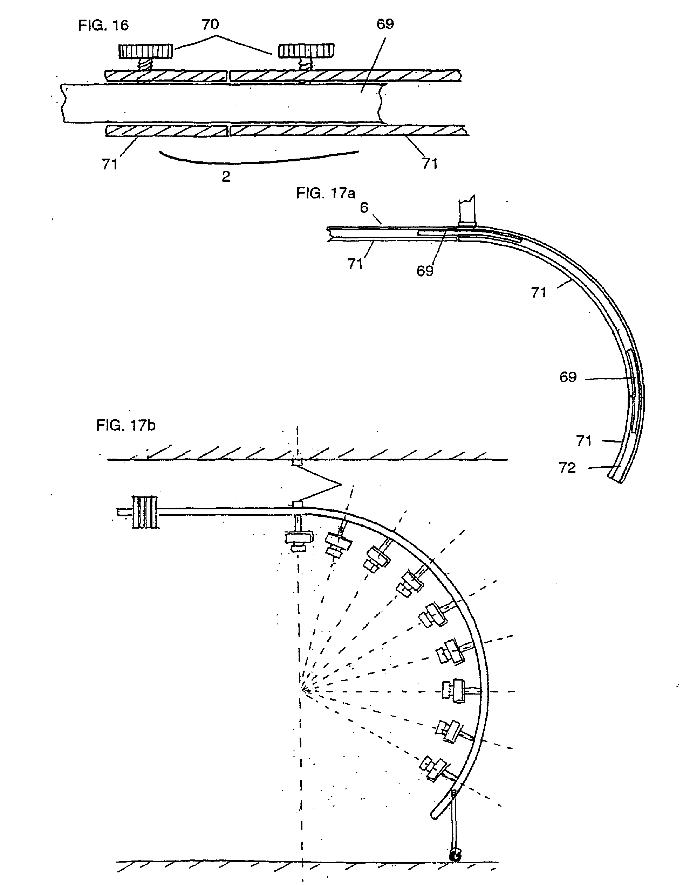

La figure 16 montre en coupe le système de jointure des tronçons 71 composant le bras 2. La jointure se fait à l'aide d'un manchon mâle 69 épousant la courbure du bras et s'enfichant dans les segments tubulaires qui composent le bras. L'ensemble est maintenu par des molettes de serrage 70. (On peut aussi préférer des tronçons de bras ayant un côté manchon mâle et un côté manchon femelle).

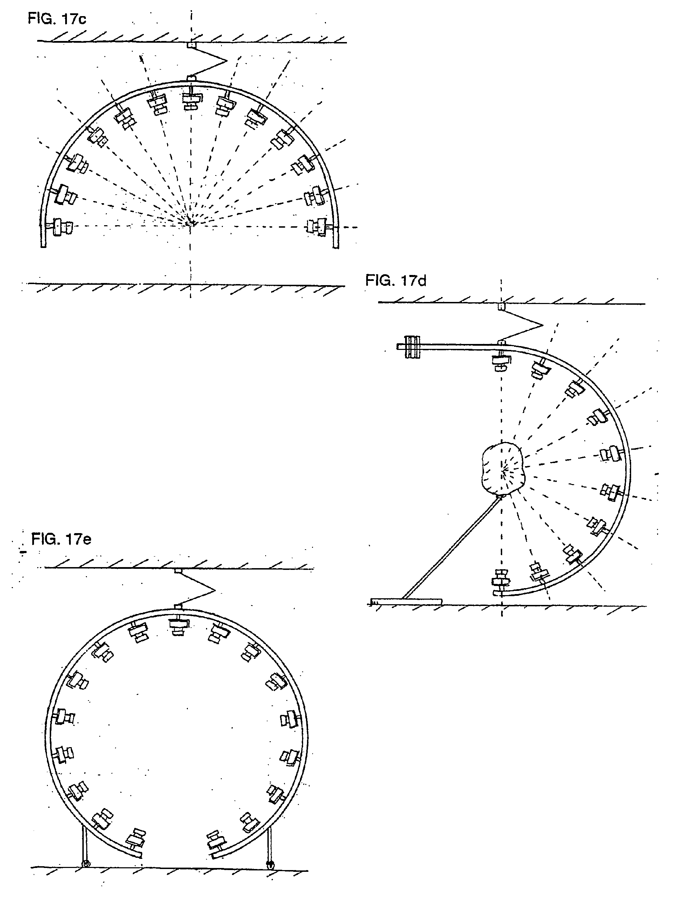

On voit sur la figure 17a comment le manchon 69 épouse la courbure du bras pour assurer la jointure des tronçons 71 qui le composent. Ainsi la forme et le secteur couvert par le bras sont modulables à l'aide de tronçons. Sur la figure 17a, un tronçon prolonge le bras horizontalement au-delà de son point d'ancrage sur le support pour former la prolongation horizontale 6 et un tronçon plus petit 72 prolonge le bras à sa base pour étendre le secteur angulaire couvert par le bras. (Il est à noter que le manchon qui assure le contact entre le tronçon horizontal et la partie courbe du bras devra prendre en compte la correction de courbure pour assurer convenablement la jointure). Les figures 17b, 17c, 17d et 17e montrent en exemple diverses formes que peut prendre le bras à l'aide du système modulable de tronçons.

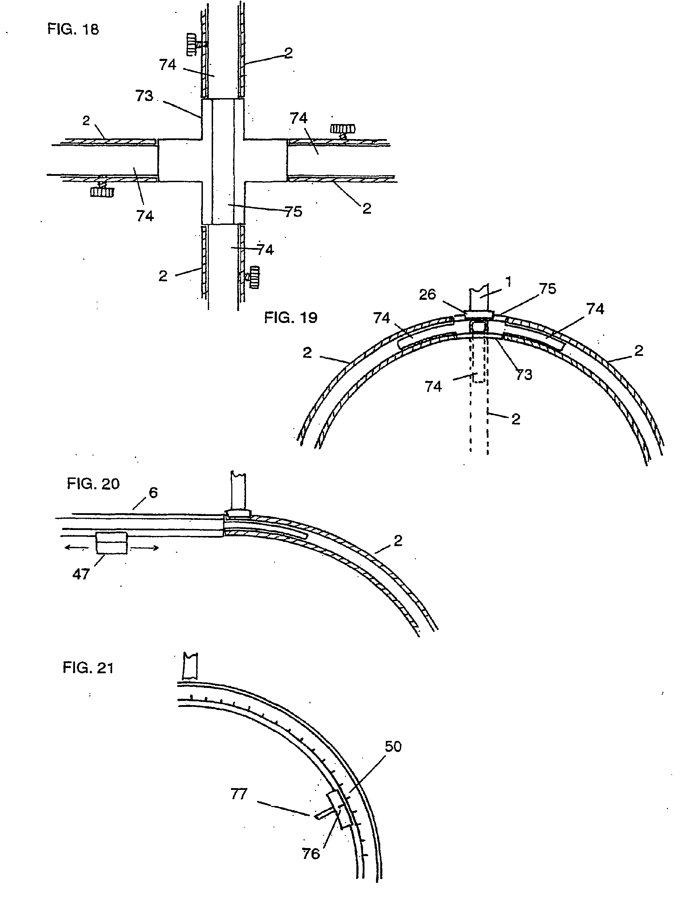

Sur la figure 18, on a une vue de dessus d'une jonction en étoile à quatre branches 73. Sur ce système viennent s'emmancher quatre bras radiaux vus en coupe 2. On distingue les quatre manchons mâles 74 qui prolongent la jonction en étoile. Sur le sommet du système d'ancrage en étoile se trouve un rail supérieur 75 sur lequel viendra se fixer le chariot d'ancrage du support. La figure 19 montre le même système vu en coupe de profil. On retrouve le support 1, le chariot d'ancrage du support 26, le système d'ancrage en étoile 73, le rail supérieur du système d'ancrage 75, les manchons mâles 74 et les bras 2 vu en coupe.

La figure 20 montre en détail la prolongation 6 du bras 2 au-delà du point d'ancrage équipé d'un chariot mobile portant un contre-poids 47. En déplaçant le chariot sur la prolongation, on peut ajuster l'équilibre du système.

La figure 21 montre la graduation sur le bras 50. On préférera graduer le bras en degrés. On voit au centre du chariot la marque d'un repère 76 permettant d'ajuster la position du chariot par rapport à la graduation du bras. Ici, il s'agit d'un chariot de fixation des appareils de prise de vue équipé d'une patte 77 orientée vers le centre du cercle épousé par le bras cintré.

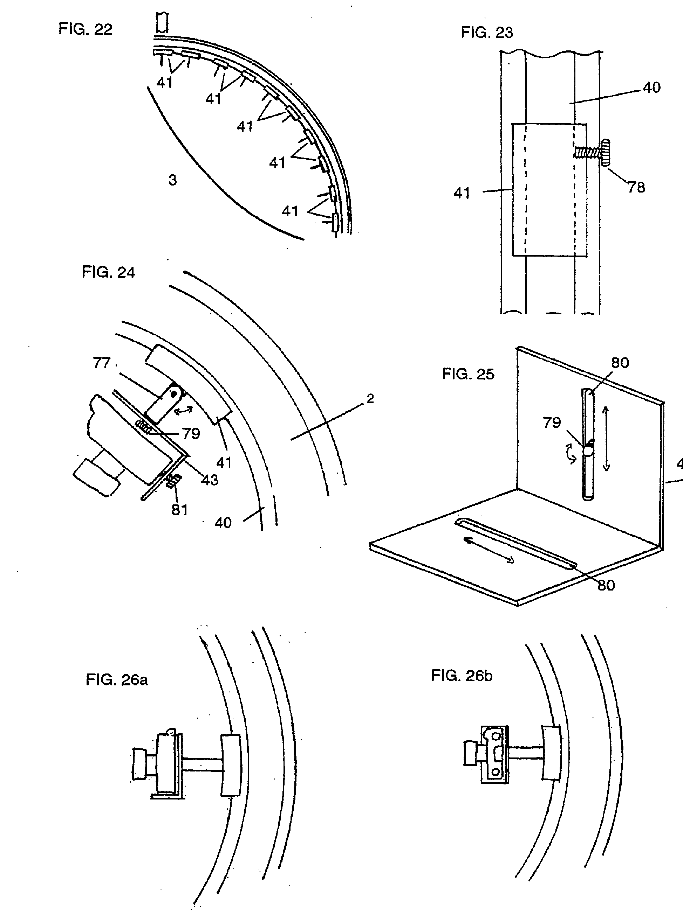

Sur la figure 22 on voit qu'un système de fixation des appareils de prise de vue 3 peut comprendre autant de chariots de fixation 41 que nécessaire à la fluidité recherchée dans le montage VR. Pour de bonnes conditions de montage, on prévoit un cliché tous les dix degrés, par conséquent, pour une prise de vue simultanée, on pourra prévoir 10 chariots pour couvrir un secteur angulaire de 90°.

Figure 23 montre que les chariots sont par exemple tous mobiles le long du bras mais sont équipés d'un système de frein 78. Ici le chariot 41 est freiné par une vis de serrage 78 entraînée par une molette et venant butter sur le rail 40 pour bloquer le chariot.

La figure 24 montre en détail un élément du système de fixation des appareils. Ce système est composé d'un chariot de fixation 41 posé sur le rail inférieur 40 du bras 2. De ce chariot part une patte 77 suivant le rayon du cercle épousé par le bras. (Ici cette patte est montrée avec une articulation, cette articulation est facultative, elle peut être utile pour faire des prises de vues de forme elliptique. On peut alors ajuster l'orientation des objectifs des appareils. De même, elle serait à prévoir dans le cas où le bras lui-même ne serait pas de forme circulaire).

À l'extrémité de cette patte se trouve une vis de fixation 79 sur laquelle est fixé un support en équerre 80 pour poser l'appareil de prise de vue. L'appareil est lui-même fixé sur l'équerre à l'aide d'une vis standard 81. L'équerre est montrée en perspective sur la figure 25. On voit les deux encoches 80 permettant le réglage de la position de l'appareil sur deux axes. De plus l'équerre peut pivoter sur une vis de fixation 79 de sorte que l'on puisse poser librement l'appareil en position portrait ou paysage. Ceci est illustré par les figures 26a où l'appareil est en position paysage et 26b où l'appareil est en position portrait.

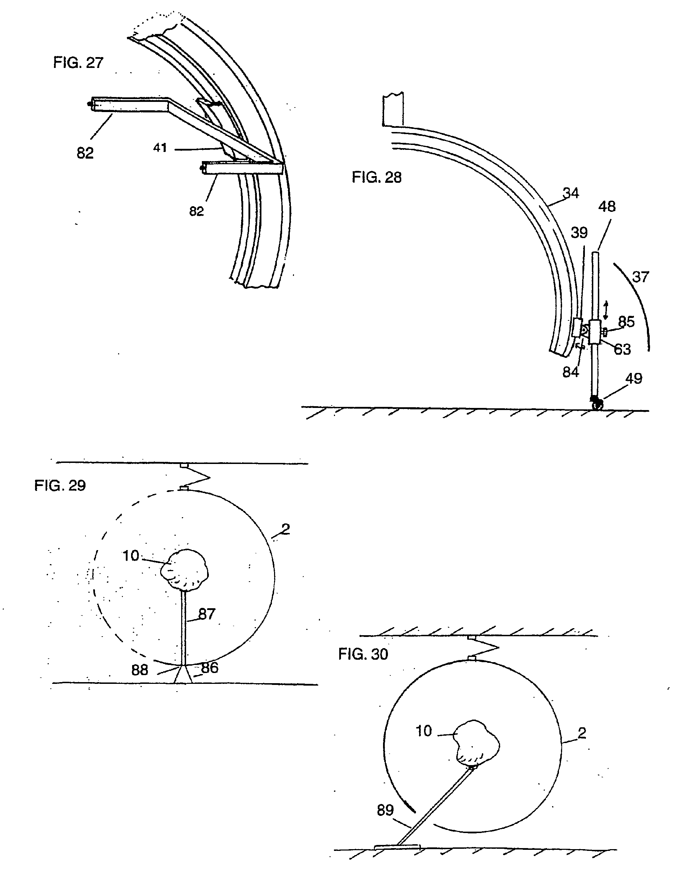

La figure 27 montre une déclinaison du système de fixation des appareils comprenant deux pattes 82 parallèles de chaque côté du bras 2 se projetant suivant le rayon du cercle épousé par le bras, fixées au chariot 41. Cette configuration permet de fixer deux appareils pour d'éventuelles prises de vues en relief.

La figure 28 montre en détail le système d'appui au sol 37 du bras. Celui-ci est fixé au bras par un chariot de fixation 39 posé sur le rail supérieur 34. L'appui est composé par une tige 48 à l'extrémité de laquelle se trouve une roulette 49. Cette tige est réglable en hauteur en coulissant dans un guide 83 fixé au chariot par l'intermédiaire d'une articulation 84. Une vis de serrage 85 permet d'immobiliser la tige dans son guide.

La figure 29 montre une configuration où le bras 2 couvre au moins un demi cercle vertical. Ici l'appui au sol peut se faire par un pivot 86. On pourra prolonger verticalement ce pivot par un axe 87 traversant le bras à sa base et à son intersection avec l'axe virtuel de rotation du système 88 pour servir de support d'objet (objet symbolisé par la masse 10). Par conséquent, le tronçon utilisé à la base du bras devra être percé pour laisser passer l'axe vertical servant de support. Ce type de configuration peut servir par exemple à présenter des objets en suspension dans leur environnement avec un peu de retouche d'image.

La figure 30 montre un autre type de support d'objet possible (objet symbolisé par la masse 10). Ici, le support 89 est placé en déport par rapport à l'axe de rotation du système. Le bras 2 n'est pas totalement refermé sur lui-même pour laisser passer le support.

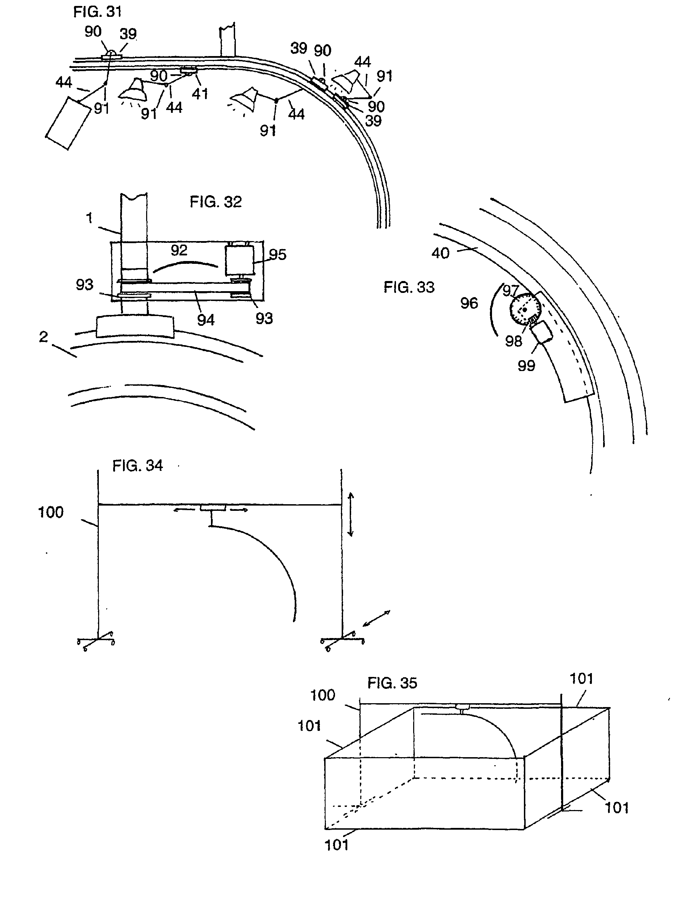

Sur la figure 31 on voit les chariots de fixation 39 et 41 posé sur le rail supérieur et inférieur équipés de bras d'extension 44. À leur base se trouve un système de fixation équipé d'une rotule 90.

Ces bras d'extension sont des bras articulés à l'aide de rotules 91. Ils servent à tenir et mettre en position avec beaucoup de souplesse les divers appareillages en usage en photographie.

Selon le développement du système illustré figure 32, la rotation du bras 2 sur le support 1 est assurée par un système de pilotage 92 composé de deux galet 93 et une courroie 94. Un premier galet est fixé à l'axe du support et l'autre est entraîné par un moteur 95. Ce système de pilotage automatique du système de prise de vue peut être contrôlé par des moyens électroniques et informatiques.

Selon le développement du système illustré figure 33, le déplacement d'au moins un chariot de fixation est assuré par un système de pilotage 96. Ce système de pilotage est intégré au chariot, il est composé d'un galet 97 en contact avec le rail 40. Ce galet est entraîné par un engrenage 98 mu par un moteur 99 posé sur le chariot. On pourra par exemple développer ce principe en utilisant une roue crantée à la place du galet et en choisissant un rail en forme de crémaillère. Ce système n'a vraiment d'intérêt que lors de l'utilisation d'un seul appareil de prise de vue, sauf dans le cas où l'on recherche des effets particuliers. Aussi un seul chariot équipé de la sorte peut suffire à une utilisation normale du système. Si l'on veut encore perfectionner le principe, on pourra prévoir un rail équipé de pistes électriques pour alimenter et commander le chariot.

Le développement du système présenté figure 34 montre l'ensemble du système maintenu sur un portique 100 mobile et réglable en hauteur. On utilisera par exemple un portique de scène. II s'agit ici d'un portique, mais cela pourra tout aussi bien être une potence ou un pont roulant. La potence a l'avantage de ne présenter qu'un pilier ce qui est appréciable pour des prises de vue en extérieurs, cela réduit d'autant le travail de retouche d'image pour effacer les piliers.

Le développement du système présenté figure 35 montre schématiquement un studio complet de prise de vue selon l'invention. Le système de prise de vue est fixé à un portique 100 et est isolé du reste du studio par des cloisons 101. Ainsi on peut placer l'objet dans son décor isolé du reste du studio. Ici les cloisons sont droites, mais on peut leur donner la forme et les dimensions que l'on souhaite. Pour certains travaux où l'on veut soigner l'éclairage on pourra choisir des cloisons de forme circulaires.

## Revendications

1. Dispositif pour la réalisation de prises de vue sphériques d'une scène, **caractérisé en ce qu'**il comporte :
- un support (26) monté pivotant autour d'un axe (12) sensiblement vertical avec un bras porteur (2) muni de moyens de fixation (17) pour plusieurs appareils de prise de vue,
- plusieurs appareils de prise de vue disposés sur le bras porteur en arc de cercle et tous orientés vers un même point de la scène à photographier.
- des moyens (27) permettant de suspendre le support au-dessus de la scène à photographier, et
- des moyens permettant de faire varier la hauteur du bras porteur (2).

2. Dispositif selon la revendication 1, **caractérisé en ce que** le support (2) présente un contrepoids (7) équilibrant le bras porteur (2) par rapport aux moyens de suspension (1).

3. Dispositif selon l'une des revendications 1 ou 2, **caractérisé en ce que** le bras porteur (2) présente des moyens d'appui au sol (37).

4. Dispositif selon l'une des revendications 1 à 3, **caractérisé en ce que** le bras porteur (2) est un bras porteur cintré en forme sensiblement d'arc de cercle ou d'arc d'ellipse disposé dans un plan vertical.

5. Dispositif selon l'une des revendications 1 à 4, **caractérisé en ce que** le support (1) présente une tête rotative comprenant un élément fixe (28) gradué et un élément mobile (29) équipé d'un repère.

## Claims

1. Device for taking spherical pictures of a scene, **characterized in that** it comprises:
- a support (1, 26) pivotally mounted about a substantially vertical axis (12) with a carrying arm (2) provided with securement means (17) for several picture taking devices,
- several picture taking devices disposed on the carrying arm in an arc of a circle and all oriented toward the same point of the scene to be photographed,
- means (27) enabling the support to be suspended above the scene to be photographed, and
- means making it possible to vary the height of the carrying arm (2).

2. Device according to claim 1, **characterized in that** the support (2) has a counterweight (7) balancing the carrying arm (2) relative to the suspension means (1).

3. Device according to one of claims 1 or 2, **characterized in that** the carrying arm (2) has means for bearing on the floor (37).

4. Device according to one of claims 1 to 3, **characterized in that** the carrying arm (2) is a carrying arm (2) bent to the shape substantially of the arc of a circle or arc of an ellipse disposed in a vertical plane.

5. Device according to one of claims 1 to 4, **characterized in that** the support (1) has a rotatable head comprising a graduated fixed member (28) and a moveable member (29) equipped with a marker.

## Patentansprüche

1. Vorrichtung zur Aufnahme von sphärischen Bildern einer Szene, **dadurch gekennzeichnet, dass** sie umfasst:
- eine um eine im Wesentlichen vertikale Achse (12) schwenkbar montierte Tragvorrichtung (26) mit einem Tragarm (2), der mit Befestigungsmitteln (17) für mehrere Aufnahmevorrichtungen versehen ist,
- mehrere Aufnahmevorrichtungen, die an dem Tragarm kreisbogenförmig angeordnet sind und alle zu dem gleichen Punkt der zu fotografierenden Szene hin gerichtet sind,
- Mittel (27), die es ermöglichen, die Tragvorrichtung über der zu fotografierenden Szene aufzuhängen, und
- Mittel, die es ermöglichen, die Höhe des Tragarms (2) zu variieren.

2. Vorrichtung nach Anspruch 1, **dadurch gekennzeichnet, dass** die Tragvorrichtung (2) ein Gegengewicht (7) aufweist, das den Tragarm (2) in Bezug auf die Aufhängemittel (1) ausbalanciert.

3. Vorrichtung nach einem der Ansprüche 1 oder 2, **dadurch gekennzeichnet, dass** der Tragarm (2) Mittel zum Aufstützen am Boden (37) aufweist.

4. Vorrichtung nach einem der Ansprüche 1 bis 3, **dadurch gekennzeichnet, dass** der Tragarm (2) ein gewölbter, im Wesentlichen kreisbogenförmiger oder ellipsenbogenförmiger Tragarm ist, der in einer vertikalen Ebene angeordnet ist.

5. Vorrichtung nach einem der Ansprüche 1 bis 4, **dadurch gekennzeichnet, dass** die Tragvorrichtung (1) einen drehbaren Kopf aufweist, der ein mit einer Skala versehenes fixes Element (28) und ein mit einer Markierung versehenes bewegliches Element (29) umfasst.
